(19) Europäisches Patentamt / European Patent Office / Office européen des brevets

(11) **EP 3 073 597 A1**

(12) **EUROPEAN PATENT APPLICATION**
published in accordance with Art. 153(4) EPC

(43) Date of publication:
**28.09.2016 Bulletin 2016/39**

(51) Int Cl.:
*H02J 3/32* (2006.01)     *H01M 10/44* (2006.01)
*H02J 7/00* (2006.01)

(21) Application number: **13897922.4**

(22) Date of filing: **19.11.2013**

(86) International application number:
**PCT/JP2013/081140**

(87) International publication number:
**WO 2015/075772 (28.05.2015 Gazette 2015/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **The Chugoku Electric Power Co., Inc.**
**Hiroshima-shi, Hiroshima 730-8701 (JP)**

(72) Inventor: **NAITO, Masaki**
**Hiroshima-shi, Hiroshima 730-8701 (JP)**

(74) Representative: **Osha Liang**
**2, rue de la Paix**
**75002 Paris (FR)**

(54) **STORAGE BATTERY CONTROL DEVICE, CONTROL METHOD, CONTROL PROGRAM, AND ELECTRICITY STORAGE SYSTEM**

(57)     [Problem]
To charge and discharge a storage battery to meet an economic benefit for a user.

[Solution]
A control device of a storage battery includes a first obtaining unit, a second obtaining unit, a first calculating unit, a second calculating unit, a third calculating unit, and a control unit. The first obtaining unit is configured to obtain first information indicative of an electricity price set for each time slot. The second obtaining unit is configured to obtain second information indicative of charge/discharge efficiencies of the storage battery. The first calculating unit is configured to calculate first electric energy charged in the storage battery. The second calculating unit is configured to calculate second electric energy of the storage battery dischargeable from the storage battery to a load, based on the first electric energy and the charge/discharge efficiencies. The third calculating unit is configured to calculate a unit charging price per unit electric energy required to charge the second electric energy based on the second electric energy, the electricity price in the time slot during which the storage battery is charged, the first electric energy, and the charge/discharge efficiencies. The control unit is configured to compare the electricity price with the unit charging price in each of the time slots. When the electricity price is lower than the unit charging price, the control unit is configured to cause an electric power system to charge the storage battery. When the electricity price is equal to or higher than the unit charging price, the control unit is configured to cause the storage battery to perform a discharge to the load.

FIG. 5

**Description**

[TECHNICAL FIELD]

The present invention relates to a control device, a control method, and a control program of a storage battery and an electricity storage system.

[BACKGROUND ART]

Recently, in order to reduce peaks of electric power demands or to achieve a similar object, an introduction of electricity storage systems to households has proceeded. In near future, it is expected that smart meters will be widely used and a real-time pricing by which an electricity price is set for each time slot will be introduced.
Therefore, various methods to decide a time slot during which a storage battery is charged and discharged to meet the economic benefits of the users have been proposed. For example, the following electricity storage system has been known. When an electricity price is cheaper than a reference charging price, the electricity storage system has the storage battery charged from the electric power system. When the electricity price is higher than a reference discharging price, the electricity storage system causes the storage battery to discharge to the load (for example, see PTL 1 to 5).

[CITATION LIST]

[Patent Literature]

[PTL 1] Japanese Patent Application Laid-open Publication No. 2012-151948
[PTL 2] Japanese Patent Application Laid-open Publication No. 2011-244682
[PTL 3] Japanese Patent Application Laid-open Publication No. 2012-16271
[PTL 4] Japanese Patent Application Laid-open Publication No. 2013-78193
[PTL 5] Japanese Patent Application Laid-open Publication No. 2013-99140

[Summary of Invention]

[Technical Problem]

Meanwhile, when the electric power system charges the storage battery and causes the storage battery to perform the discharge to the load, a loss occurs. However, the above-described electricity storage system does not consider such loss in deciding a time slot during which the storage battery performs the charge and discharge. This possibly causes a discharge from the storage battery to the load even if a real unit price of charging electric energy taking into consideration charge/discharge efficiencies is more expensive than the electricity price. Additionally, this possibly causes the charge from the electric power system to the storage battery even if the real unit price of the charging electric energy is cheaper than the electricity price. That is, this possibly allows charges and discharges with the storage battery not meeting the economic benefit for the user.

[Solution to Problem]

The present invention to solve the above-described problems includes a first obtaining unit configured to obtain first information indicative of an electricity price set for each time slot; a second obtaining unit configured to obtain second information indicative of charge/discharge efficiencies of the storage battery; a first calculating unit configured to calculate first electric energy charged in the storage battery; a second calculating unit configured to calculate second electric energy of the storage battery dischargeable from the storage battery to a load, based on the first electric energy and the charge/discharge efficiencies; a third calculating unit configured to calculate a unit charging price per unit electric energy required to charge the second electric energy based on the second electric energy, the electricity price in the time slot during which the storage battery is charged, the first electric energy, and the charge/discharge efficiencies; and a control unit configured to compare the electricity price with the unit charging price in each of the time slots, the control unit being configured to cause an electric power system to charge the storage battery when the electricity price is lower than the unit charging price, and the control unit being configured to cause the storage battery to perform a discharge to the load when the electricity price is equal to or higher than the unit charging price.
Other features of the present invention will become apparent from descriptions of the accompanying drawings and of the present specification.

[Advantageous Effects of Invention]

According to the present invention, a storage battery can be charged and discharged to meet an economic benefit for a user.

[Brief Description of Drawings]

[Fig. 1]

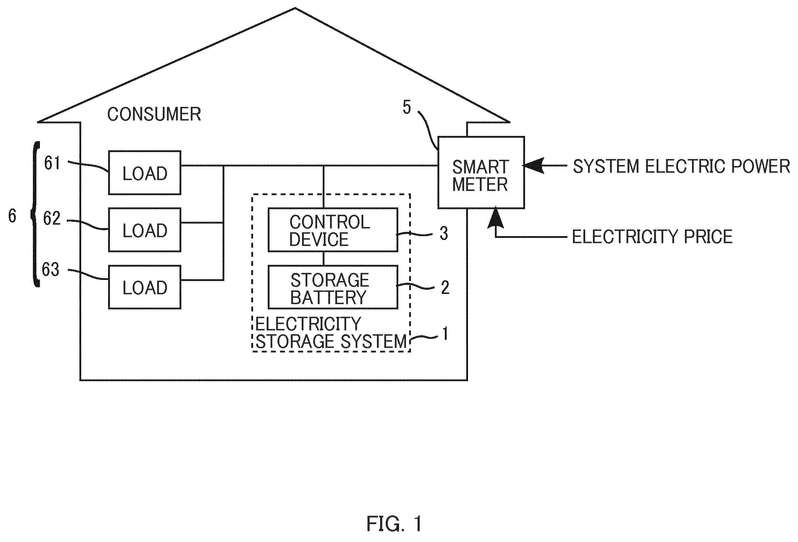

Fig. 1 is a schematic diagram describing an example of a utilization form of an electricity storage system of an embodiment of the present invention.
[Fig. 2]

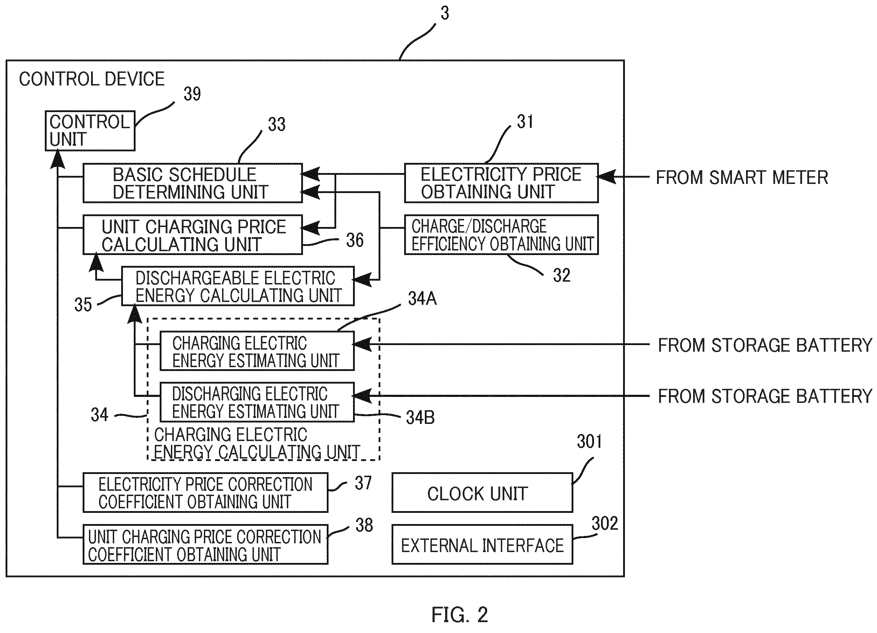

Fig. 2 is a block diagram illustrating an outline of a control device of the embodiment of the present invention.
[Fig. 3]

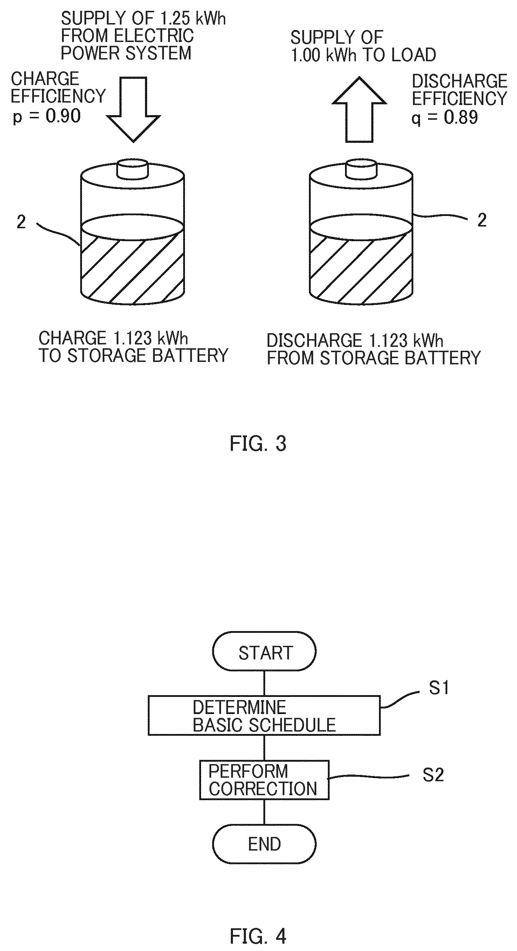

Fig. 3 is a schematic diagram describing a relationship between charge and discharge of a storage battery and electric energy according to the embodiment of the present invention.
[Fig. 4]
Fig. 4 is a flowchart showing operations by the control device of the embodiment of the present invention.
[Fig. 5]

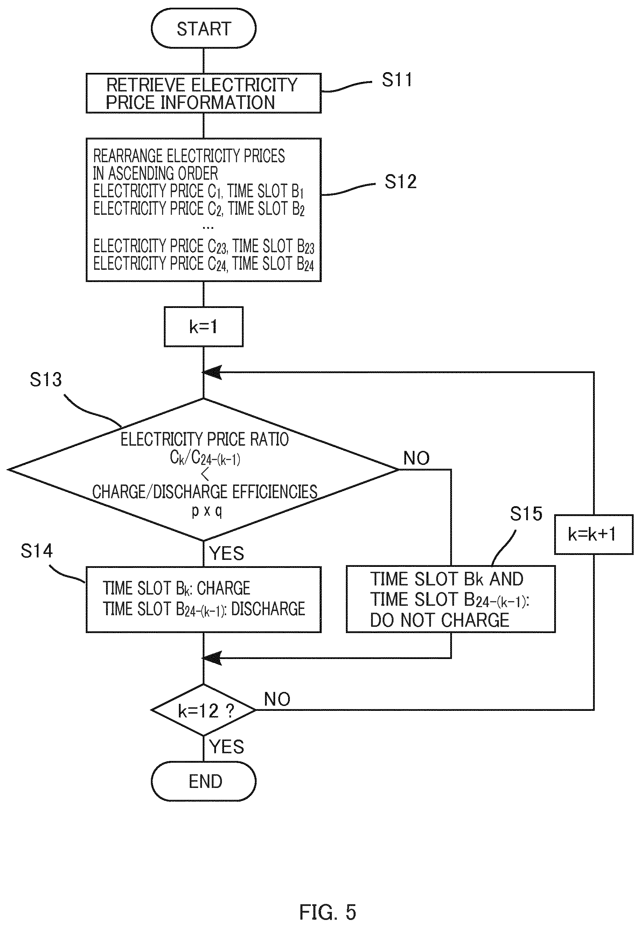

Fig. 5 is a flowchart showing operations by a basic schedule determining unit of the control device of the embodiment of the present invention.
[Fig. 6]

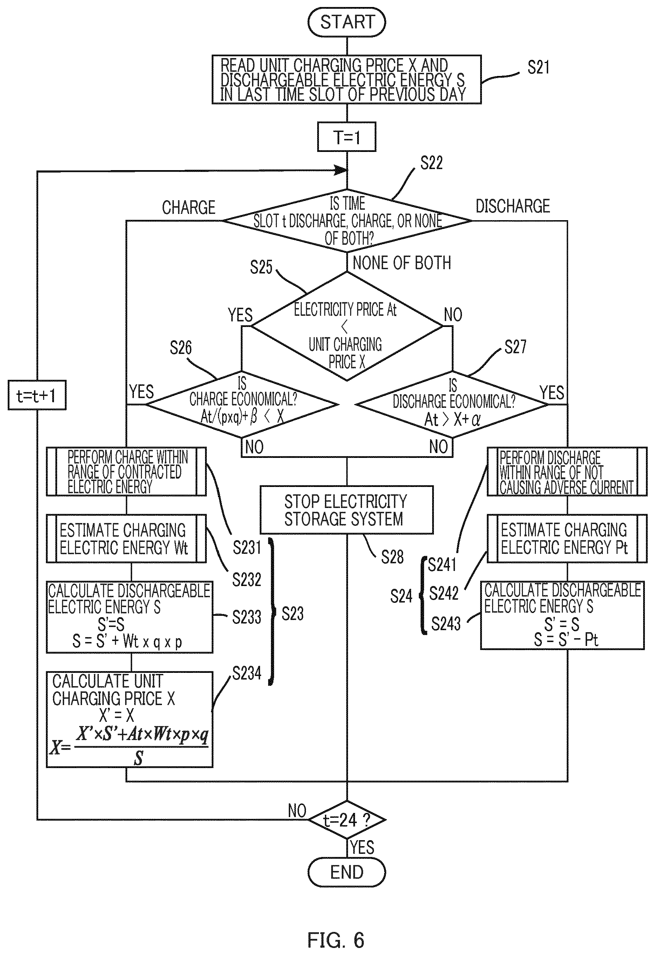

Fig. 6 is a flowchart showing operations by a control unit of an electric storage device of the embodiment of the present invention.

[Description of Embodiments]

At least the following matters will become apparent from the descriptions of the present specification and of the accompanying drawings.
The following describes an electricity storage system of an embodiment of the present invention with reference to the drawings.
===Configuration of Electricity Storage System===
Fig. 1 is schematically describes an example of a utilization form of the electricity storage system of the embodiment of the present invention. As illustrated in Fig. 1, an electricity storage system 1 of the embodiment of the present invention is installed in a house for a consumer. The electricity storage system 1 is charged from an electric power system and also performs a discharge to a load 6 (61, 62, and 63) inside the house. A smart meter 5 is installed between an interior wiring in the house for the consumer and the electric power system. Information on an electricity price for each single hour of the next day, which has been set by an electric power company, is provided to the smart meter 5.
As illustrated in Fig. 1, the electricity storage system 1 includes a storage battery 2 and a control device 3, which controls the charge and discharge of the storage battery 2. In this embodiment, the one control device 3 controls a single storage battery 2. However, the single control device 3 may control a plurality of storage batteries 2.

«Control Device»

Fig. 2 is a block diagram illustrating an outline of the control device. The control device 3 is a device that controls a charge from the electric power system to the storage battery 2 and a discharge from the storage battery 2 to the load 6. The control device 3 includes an electricity price obtaining unit 31, a charge/discharge efficiency obtaining unit 32, a basic schedule determining unit 33, a charging electric energy calculating unit 34, a dischargeable electric energy calculating unit 35, a unit charging price calculating unit 36, an electricity price correction coefficient obtaining unit 37, a unit charging price correction coefficient obtaining unit 38, and a control unit 39.

<Electricity price Obtaining Unit>

The electricity price obtaining unit 31 obtains first information, for example, from a server of an electric power company through the smart meter 5 or the Internet. The first information indicates an electricity price At set for each time slot *t*. Since the present embodiment has set the electricity price for every one hour, *t* = 1 to 24, the electricity price obtaining unit 31 has information on electricity prices A1 to A24 of every one hour from 12 a.m. to 11 p.m. After the control device 3 decides the necessity of charge and discharge of the storage battery 2 at 11 p.m. on the day and before deciding the necessity of the charge and discharge of the storage battery 2 at 12 a.m. on the next day, the electricity price obtaining unit 31 updates the first information indicative of the electricity prices At to the first information on the next day.

<Charge/Discharge Efficiency Obtaining Unit>

The charge/discharge efficiency obtaining unit 32 obtains second information indicative of charge/discharge efficiencies *p* and *q* of the storage battery 2. Here, the charge/discharge efficiencies *p* and *q* are general terms including the charge efficiency *p* and the discharge efficiency *q*. The charge efficiency *p* means a proportion of electric energy charged to the storage battery 2 with respect to electric energy supplied from the electric power system to the storage battery 2. The discharge efficiency *q* means a proportion of electric energy discharged from the storage battery 2 to the load 6 with respect to the electric energy charged to the storage battery 2. For example, as illustrated in Fig. 3, when the storage battery 2 is charged with electric energy at 1.123 kWh as a result of the electric energy at 1.25 kWh being supplied from the electric power system to the storage battery 2, the charge efficiency *p* is 0.90. When the electric energy at 1.00 kWh is supplied to the load 6 as a result of outputting electric energy at 1.123 kWh, which is charged in the storage battery 2, the discharge efficiency *q* is 0.89. In this connection, when the electric energy at 1.25 kWh is charged from the electric power system to the storage battery 2 having the above-described charge/discharge efficiencies in the time slot of electricity price: 10 yen/1.00 kWh, the electric energy dischargeable to the load is 1.00 kWh. Therefore, the electricity price which costs for charging this electric energy to the storage battery 2 is 12.5 yen. Therefore, the unit charging price of the storage battery 2 per 1.00 kWh is 12.5 yen in this case. Accordingly, for example, the discharge from this storage battery 2 to the load in the time slot where the electricity price is 11 yen/1.00 kWh does not meet the economic benefit for the user. Meanwhile, in the case where the unit charging price of the electric energy charged in the storage battery 2 is 12.5 yen/1.00 kWh, only when the storage battery 2 is charged in the time slot of electricity price: 10 yen/1.00 kWh or less, the user does not enjoy the economic benefit.

The charge/discharge efficiency obtaining unit 32, for example, may read values input by the user through an external interface 302 and may employ the values as the charge/discharge efficiencies *p* and *q*. Alternatively, the charge/discharge efficiency obtaining unit 32 may have information on main models of the storage batteries and the charge/discharge efficiencies. When the model of the storage battery 2 coupled to the control device 3 is identified, the charge/discharge efficiency obtaining unit 32 may automatically obtain the charge/discharge efficiencies corresponding to the model.

<Charging Electric Energy Calculating Unit and Dischargeable Electric Power Calculating Unit>

The charging electric energy calculating unit 34 calculates a first electric energy charged in the storage battery 2. The present embodiment calculates a cost required for charging the storage battery 2 under an assumption that the electricity price At is set for each time slot *t*. Therefore, it is required to calculate the electric energy charged to the storage battery 2 and discharged from the storage battery 2 during the relevant time slot. Accordingly, the charging electric energy calculating unit 34 includes a charging electric energy estimating unit 34A and a discharging electric energy estimating unit 34B.

The charging electric energy estimating unit 34A estimates electric energy Wt supplied from the electric power system to additionally charge the storage battery 2 from a time slot (*t*-1), immediately before the time slot *t,* until the time slot *t*. The discharging electric energy estimating unit 34B estimates electric energy Pt discharged from the storage battery 2 to the load from the time slot (*t*-1), immediately before the time slot *t,* until the time slot *t*. The first electric energy in the time slot *t* is obtained by adding the electric energy Wt $\times$ *p* to the first electric energy in the time slot (*t*-1), which has been already calculated, and subtracting the electric energy Pt / *q* from the added value.

A method for calculating the first electric energy by the charging electric energy calculating unit 34 is not limited to the above-described method. For example, the charging electric energy calculating unit 34 may obtain the first electric energy charged in the storage battery 2 in the time slot *t* directly from the storage battery 2. In this case, the electric energies Wt and Pt are obtained from a difference between the first electric energies in the time slots *t* and (*t*-1) and the charge/discharge efficiencies *p* and *q.* In the case of a positive difference value, the electric energy Wt $\times$ p is calculated and in the case of a negative value, the electric energy Pt / q is calculated.

When the storage battery 2 is charged from the electric power system, the dischargeable electric energy calculating unit 35 calculates second electric energy S of the storage battery 2 dischargeable from the storage battery 2 to the load 6 based on the above-described electric energy Wt and the charge/discharge efficiencies *p* and *q*. The dischargeable electric energy calculating unit 35 stores second electric energy S' of the storage battery 2, which was dischargeable in the time slot (t-1) immediately before the time slot $t$. The dischargeable electric energy calculating unit 35 calculates the second electric energy S of the storage battery 2 dischargeable in the time slot $t$ based on the formula: S = S' + Wt $\times$ $p$ $\times$ $q$. When the storage battery 2 performs the discharge to the load 2, the dischargeable electric energy calculating unit 35 calculates the second electric energy S of the storage battery 2 based on the formula: S = S' - Pt.

<Unit Charging Price Calculating Unit>

The unit charging price calculating unit 36 calculates a unit charging price X per unit electric energy required to charge the second electric energy S based on the second electric energy S, the electricity price At in the time slot $t$, the electric energy Wt, and the charge/discharge efficiencies $p$ and $q$. The unit charging price calculating unit 36 stores a unit charging price X' in the time slot ($t$-1) immediately before the time slot $t$. The unit charging price calculating unit 36 calculates the unit charging price X in the time slot $t$ based on the formula:

$$ X = \frac{X' \times S' + At \times Wt \times p \times q}{S} $$

<Electricity Price Correction Coefficient Obtaining Unit and Unit Charging Price Correction Coefficient Obtaining Unit>

The electricity price correction coefficient obtaining unit 37 obtains a coefficient $\beta$ to correct the electricity price At. The coefficient P is any given constant set to prevent deterioration of the storage battery 2 caused by repeated charging and stopping of the charging of the storage battery 2 frequently and a similar operation. The coefficient $\beta$ may be set from the beginning or may be a value input from the external interface 302 by the user.

The unit charging price correction coefficient obtaining unit 38 obtains a coefficient $\alpha$ to correct the unit charging price X. The coefficient $\alpha$ is any given constant set to prevent the deterioration of the storage battery 2 caused by repeated discharging and stopping of the discharging of the storage battery 2 frequently and a similar operation. The coefficient $\alpha$ may be set from the beginning or may be a value input from the external interface 302 by the user.

<Basic Schedule Determining Unit>

The basic schedule determining unit 33 determines a basic schedule regarding the charging and the discharging of the storage battery 2. That is, the basic schedule determining unit 33 determines whether to charge, discharge, or neither charge nor discharge the storage battery 2 in the time slot $t$ based on the electricity price At corresponding to the time slot $t$ and the charge/discharge efficiencies $p$ and $q$.

Specifically, as illustrated in Fig. 5, the basic schedule determining unit 33 reads the electricity prices At in the time slot $t$ from the electricity price obtaining unit 31, rearranges the electricity prices At in ascending order of price, and sets time slots B1 to B24 and electricity prices C1 to C24. Then, the basic schedule determining unit 33 creates an electricity price ratio Ck/C(24-(k-1)), (here, $k$ = 1 to 12) such as: the electricity price ratio C1/C24 between the cheapest electricity price C1 and the most expensive electricity price C24, the electricity price ratio C2/C23 between the second cheapest electricity price C2 and the second most expensive electricity price C23, and so on. The basic schedule determining unit 33 compares the respective electricity price ratios with the product of the charge efficiency and the discharge efficiency, $p$ $\times$ $q$.

When the electricity price ratio Ck/C(24-(k-1)) is less than the product $p$ $\times$ $q$, the basic schedule determining unit 33 charges the storage battery 2 in a time slot Bk, which corresponds to the cheaper electricity price Ck, and discharges the storage battery 2 in the time slot B(24-(k-1)), which corresponds to the more expensive electricity price C(24-(k-1)). The storage battery 2 is charged in the time slot Bk and the storage battery 2 is discharged in the time slot B(24-(k-1)) because these operations are considered to be economically beneficial to the user.

Meanwhile, in the case where the electricity price ratio Ck/C(24-(k-1)) is equal to or more than the product $p$ $\times$ $q$, the basic schedule determining unit 33 neither charges nor discharges the storage battery 2 in the time slots Bk and B(24-(k-1)), which correspond to the electricity prices Ck and C(24-(k-1)), respectively. Because, it is considered that, in the time slots Bk and B(24-(k-1)), neither the charge nor the discharge of the storage battery 2 brings an economic benefit to the user.

The basic schedule determining unit 33 determines the basic schedule regarding the charge and discharge of the storage battery 2 on the next day, for example, once a day. A timing that the basic schedule determining unit 33 determines the basic schedule of the next day is after the electricity price obtaining unit 31 updates the electricity prices At to ones for the next day and before 12 a.m.

<Control Unit>

The control unit 39 compares the electricity price At with the unit charging price X for each time slot $t$. When the electricity price At is lower than the unit charging price X, the control unit 39 causes the electric power system to charge the storage battery 2. When the electricity price At is equal to or higher than the unit charging price X, the control unit 39 causes the storage battery 2 to perform the discharge to the load 6. As described later, the electricity price At and the unit charging price X may be corrected.

With this embodiment, as illustrated in Fig. 6, the control unit 39 first refers to the basic schedule determined by the basic schedule determining unit 33. The control unit 39 then classifies the operations of the storage battery 2 in the time slot $t$ into three types, "charge," "discharge," and "none of both."

When the time slot $t$ is classified into "charge," the control unit 39 causes the electric power system to charge the storage battery 2 during the time slot $t$ within a range of allowable electric power based on an electric power supply contract. To charge the storage battery 2 during the time slot $t$, the charging electric energy estimating unit 34A calculates the electric energy Wt supplied from the electric power system. After an elapse of the time slot $t$, the dischargeable electric energy calculating unit 35 calculates the dischargeable electric energy S using the charge/discharge efficiencies $p$ and $q$ and the electric energy Wt. The unit charging price calculating unit 36 calculates the unit charging price X using the charge/discharge efficiencies $p$ and $q$, the electric energy Wt, and the dischargeable electric energy S.

When the time slot $t$ is classified into "discharge," the control unit 39 causes the storage battery 2 to start the discharge to the load 6 during the time slot $t$ within a range where the electric power output from the storage battery 2 does not reversely flow to the electric power system. The discharging electric energy estimating unit 34B calculates the electric energy Pt discharged from the storage battery 2 to the load during the time slot $t$. After the elapse of the time slot $t$, the dischargeable electric energy calculating unit 35 calculates the dischargeable electric energy S using the electric energy Pt.

When the time slot $t$ is classified into "none of both," the control unit 39 performs the following operation to examine whether the charge and discharge of the storage battery 2 meets the economic benefit for the user or not in detail based on a criterion different from the determination with the basic schedule.

The control unit 39 compares the electricity price At with the unit charging price X in the time slot $t$. When the electricity price At is lower than the unit charging price X, the control unit 39 compares a corrected electricity price At' with the unit charging price X to judge whether charging the storage battery 2 brings an economic benefit to the user. Here, the corrected electricity price At' is given by the following formula: At' = At/($p \times q$) + β. That is, the corrected electricity price At' is the electricity price where the charge/discharge efficiencies $p$ and $q$ are taken into consideration. Additionally, through β, the deterioration of the storage battery 2 due to the repeated charging and stopping of the charging frequently, and a similar operation is taken into consideration. When the corrected electricity price At' is lower than the unit charging price X, the control unit 39 causes the electric power system to charge the storage battery 2. In this case, the charge of the storage battery 2 reduces the unit charging price X of the storage battery 2; therefore, charging the storage battery 2 meets the economic benefit for the user. Meanwhile, in the case where the corrected electricity price At' is equal to or higher than the unit charging price X, the control unit 39 stops the electricity storage system 1 during the time slot $t$. This operation is performed due to the following reason. The increase in the unit charging price X of the storage battery 2 by charge does not meet the economic benefit for the user. Additionally, a loss that the user incurs due to the deterioration of the storage battery 2 caused by the repeated charging and stopping of the charging and a similar operation is emphasized over an advantage that the user obtains by the charge.

When the electricity price At is equal to or more than the unit charging price X, the control unit 39 compares the electricity price At with the corrected unit charging price (X + α) to judge whether the discharge of the storage battery 2 brings an economic benefit to the user or not. That is, the control unit 39 determines an availability of discharge considering the deterioration of the storage battery 2 caused by frequent discharging and stopping of the discharging and a similar operation. When the electricity price At is higher than the corrected unit charging price (X + α), the control unit 39 causes the storage battery 2 to perform the discharge to the load 6. This is because that supplying the electric power at the unit charging price X, which is cheaper than the electricity price At by at least α, to the load 6 brings the economic benefit to the user. Meanwhile, in the case where the electricity price At is equal to or lower than the corrected unit charging price (X + α), the control unit 39 stops the electricity storage system 1 during the time slot $t$. This operation is performed due to the following reason. A loss that the user incurs due to the deterioration of the storage battery 2 caused by the repeated discharging and stopping of the discharging and a similar operation is emphasized over an advantage that the user obtains by the discharge.

The control device 3 includes a clock unit 301. The clock unit 301 obtains information on time to charge and discharge the storage battery 2 according to the schedule for the charge and discharge determined by the control unit 39. For example, the clock unit 301 may obtain the time information from the smart meter 5 or may obtain the time information over the Internet. The time recorded in the clock unit 301 is preferably synchronized with time recorded in the smart meter 5.

===Operation of Electricity Storage System===

The following describes the operations by the control device 3 of the present embodiment with reference to Fig. 4 to Fig. 6.

Fig. 4 is a flowchart showing the operations by the control device 3. Fig. 5 is a flowchart showing operations by the basic schedule determining unit 33. Fig. 6 is a flowchart showing the operations by the control unit 3.

As illustrated in Fig. 4, the control device 3 determines the basic schedule regarding the charge and discharge of the storage battery 2 for the next day at Step S1. Then, the control device 3 corrects the basic schedule at Step S2.

<<Determining Basic Schedule>>

Step S1 is a process that decides whether the storage battery 2 is worth being charged, worth being discharged, or worth being neither charged nor discharged in each time slot based on the electricity price At in the time slot $t$ and the charge/discharge efficiencies $p$ and $q$. As illustrated in Fig. 5, Step S1 includes Steps S11 to S15.

That is, at Step S11, the basic schedule determining unit 33 retrieves the time slots $t$ = 1 to 24 and the corresponding electricity prices A1 to A24 from the electricity price obtaining unit 31.

Next, at Step S2, the basic schedule determining unit 33 rearranges the electricity prices A1 to A24 in an ascending order of price and sets the rearranged electricity prices as C1 to C24 and the corresponding time slots as B1 to B24.

At Step S13, the basic schedule determining unit 33 creates the electricity price ratio Ck/C(24-(k-1)) (here, $k$ = 1 to 12) from the electricity prices C1 to C24 and compares the electricity price ratio with the product of the charge efficiency $p$ and the discharge efficiency $q$, $p \times q$.

At Step S 14, when the electricity price ratio Ck/C(24-(k-1)) is less than the product $p \times q$, the basic schedule determining unit 33 determines that the storage battery 2 is worth being charged in the time slot Bk corresponding to the electricity price Ck. The basic schedule determining unit 33 also determines that the storage battery 2 is worth being discharged in the time slot B(24-(k-1)) corresponding to the electricity price C(24-(k-1)).

At Step S15, when the electricity price ratio Ck/C(24-(k-1)) is equal to or more than the product $p \times q$, the basic schedule determining unit 33 determines that neither discharging nor discharging the storage battery 2 in the time slots Bk and B(24-(k-1)) is advantageous to the user.

The basic schedule determining unit 33 repeats Steps S 13 to S 15 from $k$ = 1 to $k$ = 12, classifies the time slots B1 to B24 into three; the time slot during which the storage battery 2 is charged, the time slot during which the storage battery 2 is discharged, and the time slot during which the storage battery 2 is neither charged nor discharged, and terminates Step S 1.

Step S1 is performed after the basic schedule determining unit 33 obtains the information on the electricity prices At of the next day from the electricity price obtaining unit 31.

«Correction of Basic Schedule»

Step S2 is a step that decides the necessity of the charge and the discharge of the storage battery 2 using an index different from Step S1. As illustrated in Fig. 6, Step S2 includes Steps S21 to S28.

First, at Step S21, the unit charging price X and the dischargeable electric energy S in the last time slot of the previous day are read. Then, at Step S22, the basic schedule for the charge and discharge determined at Step S1 is referred. The operations of the storage battery 2 in the time slots $t$ are classified into three, "charge," "discharge," and "none of both."

<Operations in Time Slot for Charge>

When the time slot $t$ is classified into the "charge" time slot, during the time slot $t$, the electric power system charges the storage battery 2 following Step S23. Step S23 includes Steps S231 to S234.

Specifically, at Step S231, within a range of the electric energy stipulated in the electric power supply contract, which is concluded between the user and the electric power company, the electric power system charges the storage battery 2. At Step S232, to charge the storage battery 2 during the time slot $t$, the electric energy Wt supplied from the electric power system is calculated. After an elapse of the time slot $t$, Step S233 is performed, and as described above, the electric energy S dischargeable from the storage battery 2 to the load 6 is calculated. At Step S234, the unit charging price X for the electric energy S is calculated, and then a sequence of operations at Step S23 are terminated.

<Operations in Time Slot for Discharge>

When the time slot $t$ is classified into the "discharge" time slot, during the time slot $t$, the storage battery 2 performs the discharge to the load 6 following Step S24. Step S24 includes Steps S241 to S243.

Specifically, at Step S231, the storage battery 2 performs the discharge to the load 6 within the range where the electric power output from the storage battery 2 does not reversely flow to the electric power system. Then, at Step S242, the electric energy Pt discharged from the storage battery 2 to the load is calculated. Additionally, at Step S243, the dischargeable electric energy S is calculated as described above. Then, a sequence of operations at Step S24 are terminated.

<Operations in Time Slot for "None of both">

When the time slot $t$ is classified into the "none of both" time slot, at Steps S25 to S28, the judgment on the charge and discharge of the storage battery 2 is performed again using criteria different from the determination with the basic schedule. The criteria used here are mainly the electricity price At and the unit charging price X with respect to the dischargeable electric energy S of the storage battery 2.

At Step S25, the electricity price At is compared with the unit charging price X. When the electricity price At is lower than the unit charging price X, to further examine whether the storage battery 2 is worth being charged from the electric power system or not, the corrected electricity price At' is compared with the unit charging price X at Step 26. As described above, the electricity price At is corrected with the charge/discharge efficiencies $p$ and $q$ and the correction coefficient $\beta$ and becomes the electricity price At'.

When the corrected electricity price At' is lower than the unit charging price X, it is judged that the storage battery 2 is worth being charged in the time slot $t$ and the step transitions to Step S23 regarding the charge. Meanwhile, when the corrected electricity price At' is equal to or higher than the unit charging price X, it is determined that the storage battery 2 is not worth being charged in the time slot $t$ and the step proceeds to Step 28. The electricity storage system 1 is stopped during the time slot $t$ at Step 28.

At Step S25, when the electricity price At is equal to or higher than the unit charging price X, to further examine whether the storage battery 2 is worth being discharged to the load 6 or not, at Step 27, the electricity price At is compared with the corrected unit charging price $(X+\alpha)$.

When the electricity price At is higher than the corrected unit charging price $(X+\alpha)$, it is judged that the storage battery 2 is worth being discharged to the load 6 in the time slot $t$. The step transitions to Step S24 regarding the discharge. Meanwhile, when the electricity price At is equal to or lower than the corrected unit charging price $(X+\alpha)$, it is determined that the storage battery 2 is not worth being discharged to the load 6 in the time slot $t$ and the step proceeds to Step 28. The electricity storage system 1 is stopped during the time slot $t$ at Step 28.

When Steps S22 to S28 are performed for all time slots $t$, Step S2 is terminated.

Following the final charge and discharge schedule for the storage battery 2 thus set, the electricity storage system 1 charges, discharges, or stops the storage battery 2.

Accordingly, the electricity storage system 1 of the present embodiment determines the charge and discharge of the storage battery 2 using two criteria. This ensures precise charge and discharge controls of the storage battery 2 meeting the economic benefit for the user.

As described above, the electricity price obtaining unit 31 obtains the first information, which indicates the electricity prices At set for each time slot $t$. The charge/discharge efficiency obtaining unit 32 obtains the second information, which indicates the charge/discharge efficiencies $p$ and $q$ of the storage battery 2. The charging electric energy calculating unit 34 calculates the first electric energy charged to the storage battery 2. The dischargeable electric energy calculating unit 35 calculates the second electric energy S of the storage battery 2 dischargeable from the storage battery 2 to the load 6 based on the first electric energy and the charge/discharge efficiencies $p$ and $q$. The unit charging price calculating unit 36 calculates the unit charging price X per unit electric energy required to charge the second electric energy S based on the second electric energy S, the electricity price At in the time slot $t$ during which the storage battery 2 is charged, the first electric energy, and the charge/discharge efficiencies $p$ and $q$. The control unit 39 compares the electricity price At with the unit charging price X in each time slot $t$. When the electricity price At is lower than the unit charging price X, the control unit 39 causes the electric power system to charge the storage battery 2. When the electricity price At is equal to or higher than the unit charging price X, the control unit 39 causes the storage battery 2 to perform the discharge to the load 6. That is, the control device 1 considers the charge/discharge efficiencies $p$ and $q$ when calculating the unit charging price X with respect to the second electric energy S of the storage battery 2. Then, the control device 1 compares the unit charging price X with the electricity price At and determines the necessity of the charge and discharge of the storage battery 2. Accordingly, even in the case where the electricity price is set in each time slot under the real-time pricing, the storage battery 2 can be charged and discharged so as to meet the economic benefit for the user.

When the electricity price At is lower than the unit charging price X, the control unit 39 divides the electricity price At by the charge/discharge efficiencies *p* and *q* to correct the electricity price At. The control unit 39 compares the corrected electricity price At' with the unit charging price X. When the corrected electricity price At' is equal to or higher than the unit charging price X, the control unit 39 inhibits the charge from the electric power system to the storage battery 2. It can be said that the corrected electricity price At' is the electricity price converted into a price during discharge. When such electricity price At' is equal to or higher than the unit charging price X, the discharge of the storage battery 2 does not meet the economic benefit for the user. Inhibiting such discharge ensures controlling the charging and stopping of the charging of the storage battery so as to meet the economic benefit for the user.

The electricity price correction coefficient obtaining unit 37 obtains a first correction coefficient to correct the electricity price At. When the electricity price At is lower than the unit charging price X, the control unit 39 corrects the electricity price At based on the first correction coefficient and compares the corrected electricity price At' with the unit charging price X. When the corrected electricity price At' is equal to or higher than the unit charging price X, the control unit 39 inhibits the charge from the electric power system to the storage battery 2. The first correction coefficient is, for example, a value regarding the deterioration of the storage battery 2. That is, the control device 1 can determine the necessity of the charge of the storage battery 2 including an element other than the price. Thus the control device 1 can ensure charging the storage battery 2 so as to meet the economic benefit for the user.

The first correction coefficient is any given positive value $\beta$ set to avoid repeated charging and stopping of the charging of the storage battery 2 exceeding a predetermined number of times in a constant period. The control unit 39 adds the any given positive value $\beta$ to correct the electricity price At. Repeating the charging and stopping of the charging frequently results in the deterioration of the storage battery 2, not preferable for the user. The introduction of the any given positive value $\beta$ as the first correction coefficient allows the control device 1 to avoid repeating the charging and stopping of the charging of the storage battery 2 frequently. Thus the control device 1 can ensure controlling the charging and stopping of the charging of the storage battery 2 so as to meet the economic benefit for the user.

The unit charging price correction coefficient obtaining unit 38 obtains a second correction coefficient to correct the unit charging price X. When the electricity price At is equal to or higher than the unit charging price X, the control unit 39 corrects the unit charging price X based on the second correction coefficient and compares the electricity price At with the corrected unit charging price. When the electricity price At is equal to or lower than the corrected unit charging price, the control unit 39 inhibits the discharge from the storage battery 2 to the load 6. That is, the control device 1 can determine the necessity of the discharge of the storage battery 2 including an element other than the price. Thus the control device 1 can ensure controlling the charging and stopping of the charging of the storage battery 2 so as to meet the economic benefit for the user.

The second correction coefficient is any given positive value $\alpha$ set to avoid repeated discharging and stopping of the discharging of the storage battery 6 exceeding a predetermined number of times in a constant period. The control unit 39 adds the any given positive value $\alpha$ to correct the unit charging price X. Repeating the discharging and stopping of the discharging frequently results in the deterioration of the storage battery 2, not preferable for the user. The introduction of the any given positive value $\alpha$ as the second correction coefficient allows the control device 1 to avoid repeating the discharging and stopping of the discharging frequently. This ensures controlling the discharging and stopping of the discharging of the storage battery 2 so as to meet the economic benefit for the user.

The basic schedule determining unit 33 causes the storage battery 2 to perform the discharge to the load 6, causes the electric power system to charge the storage battery 6, and stop the storage battery 2 based on the result of comparison of the ratio of the electricity prices At in different time slots *t* and the charge/discharge efficiencies $p \times q.$ The correction control unit compares the electricity price At with the unit charging price X in the time slot *t* during which the storage battery 2 is determined to be stopped by the basic schedule determining unit 33. When the electricity price At is lower than the unit charging price X, the correction control unit causes the electric power system to charge the storage battery 2. When the electricity price At is equal to or higher than the unit charging price X, the correction control unit causes the storage battery 2 to perform the discharge to the load 6. The use of the different determination criteria for determination of the basic schedule and the correction control ensures precise judgment on the availability of the charge and discharge of the storage battery 2. This ensures controlling the charge and the discharge of the storage battery 2 so as to meet the economic benefit for the user.

The electricity storage system 1 includes the storage battery 2 and the control device 3, which controls the charge and discharge of the storage battery 2. This ensures providing the electricity storage system that can charge and discharge the storage battery 2 so as to meet the economic benefit for the user.

The embodiments are intended for easy understanding of the present invention and are not in any way to be construed as limiting the present invention. The present invention may be modified and improved without departing from the scope of the invention, and equivalents thereof are also encompassed by the invention.

For example, the time slot *t* to which the electricity price At is set may be 30 minutes. In this case, *t* = 1 to 48, and the electricity prices are A1 to A48.

The basic schedule determining unit 33 and Step S1, which corresponds to the basic schedule determining unit 33, can be omitted. In this case, it is only necessary to omit Step S22 or configure a setting such that "none of both" is selected at Step S22.

The respective functions that the control device 3 has may be executed by a computer program.

The electricity storage system 1 may include a plurality of storage batteries 2 and one control device that batch-controls the storage batteries 2.

The control device 3 may be independent from the electricity storage system 1.

The control device 3 may be incorporated into the smart meter 5.

[Reference Signs List]

1      electricity storage system
2      storage battery
3      control device
31     electricity price obtaining unit
32     charge/discharge efficiency obtaining unit
33     basic schedule determining unit
34     charging electric energy calculating unit
35     dischargeable electric energy calculating unit
36     unit charging price calculating unit
39     control unit

## Claims

1. A control device of a storage battery, comprising:

   a first obtaining unit configured to obtain first information indicative of an electricity price set for each time slot;
   a second obtaining unit configured to obtain second information indicative of charge/discharge efficiencies of the storage battery;
   a first calculating unit configured to calculate first electric energy charged in the storage battery;
   a second calculating unit configured to calculate second electric energy of the storage battery dischargeable from the storage battery to a load, based on the first electric energy and the charge/discharge efficiencies;
   a third calculating unit configured to calculate a unit charging price per unit electric energy required to charge the second electric energy based on the second electric energy, the electricity price in the time slot during which the storage battery is charged, the first electric energy, and the charge/discharge efficiencies; and
   a control unit configured to compare the electricity price with the unit charging price in each of the time slots, the control unit being configured to cause an electric power system to charge the storage battery when the electricity price is lower than the unit charging price, and the control unit being configured to cause the storage battery to perform a discharge to the load when the electricity price is equal to or higher than the unit charging price.

2. The control device of the storage battery according to claim 1, wherein the control unit is configured to divide the electricity price by the charge/discharge efficiencies to correct the electricity price when the electricity price is lower than the unit charging price, compare the corrected electricity price with the unit charging price, and inhibit the charging from the electric power system to the storage battery when the corrected electricity price is equal to or higher than the unit charging price.

3. The control device of the storage battery according to claim 1, further comprising a third obtaining unit configured to obtain a first correction coefficient to correct the electricity price, wherein the control unit is configured to correct the electricity price based on the first correction coefficient when the electricity price is lower than the unit charging price, compare the corrected electricity price with the unit charging price, and inhibit the charging from the electric power system to the storage battery when the corrected electricity price is equal to or higher than the unit charging price.

4. The control device of the storage battery according to claim 3, wherein:

the first correction coefficient is any given positive value set to avoid repeated charging and stopping of charging of the storage battery exceeding a predetermined amount of times in a constant period, and

the control unit is configured to add the any given positive value to correct the electricity price.

5. The control device of the storage battery according to any one of claims 1 to 4, further comprising a fourth obtaining unit configured to obtain a second correction coefficient to correct the unit charging price, wherein the control unit is configured to

correct the unit charging price based on the second correction coefficient when the electricity price is equal to or higher than the unit charging price, compare the electricity price with the corrected unit charging price, and inhibit the discharge from the storage battery to the load when the electricity price is equal to or lower than the corrected unit charging price,.

6. The control device of the storage battery according to claim 5, wherein:

the second correction coefficient is any given positive value set to avoid repeated discharging and stopping of discharging of the storage battery exceeding a predetermined amount of times in a constant period, and the control unit is configured to add the any given positive value to correct the unit charging price.

7. A control device of a storage battery, comprising:

a first obtaining unit configured to obtain first information indicative of an electricity price set for each time slot; a second obtaining unit configured to obtain second information indicative of charge/discharge efficiencies of the storage battery;

a first calculating unit configured to calculate first electric energy charged in the storage battery;

a second calculating unit configured to calculate second electric energy of the storage battery dischargeable from the storage battery to a load, based on the first electric energy and the charge/discharge efficiencies; a third calculating unit configured to calculate a unit charging price per unit electric energy required to charge the second electric energy based on the second electric energy, the electricity price in the time slot during which the storage battery is charged, the first electric energy, and the charge/discharge efficiencies;

a basic schedule determining unit configured to cause the storage battery to perform a discharge to the load, cause the electric power system to charge the storage battery, and stop the storage battery based on a result of a comparison between a ratio of the electricity prices in the different time slots and the charge/discharge efficiencies; and

a correction control unit configured to compare the electricity price with the unit charging price in the time slot during which the storage battery is determined to be stopped by the basic schedule determining unit, cause an electric power system to charge the storage battery when the electricity price is lower than the unit charging price, and cause the storage battery to perform a discharge to the load when the electricity price is equal to or higher than the unit charging price.

8. A control method of a storage battery, comprising:

obtaining first information indicative of an electricity price set for each time slot;
obtaining second information indicative of charge/discharge efficiencies of the storage battery;
calculating first electric energy charged in the storage battery;
calculating second electric energy of the storage battery dischargeable from the storage battery to a load, based on the first electric energy and the charge/discharge efficiencies;
calculating a unit charging price per unit electric energy required to charge the second electric energy based on the second electric energy, the electricity price in the time slot during which the storage battery is charged, the first electric energy, and the charge/discharge efficiencies; and
comparing the electricity price with the unit charging price in each of the time slots, causing an electric power system to charge the storage battery when the electricity price is lower than the unit charging price, causing the storage battery to perform a discharge to the load when the electricity price is equal to or higher than the unit charging price.

9. A control program of a storage battery for causing a computer to execute:

obtaining first information indicative of an electricity price set for each time slot;
obtaining second information indicative of charge/discharge efficiencies of the storage battery;

calculating first electric energy charged in the storage battery;

calculating second electric energy of the storage battery dischargeable from the storage battery to a load, based on the first electric energy and the charge/discharge efficiencies;

calculating unit charging price per unit electric energy required to charge the second electric energy based on the second electric energy, the electricity price in the time slot during which the storage battery is charged, the first electric energy, and the charge/discharge efficiencies; and

comparing the electricity price with the unit charging price in each of the time slots, cause an electric power system to charge the storage battery when the electricity price is lower than the unit charging price, and cause the storage battery to perform a discharge to the load when the electricity price is equal to or higher than the unit charging price.

10. An electricity storage system, comprising:

a storage battery; and

a control device configured to control a charge and a discharge of the storage battery, wherein the control device includes:

a first obtaining unit configured to obtain first information indicative of an electricity price set for each time slot;

a second obtaining unit configured to obtain second information indicative of charge/discharge efficiencies of the storage battery;

a first calculating unit configured to calculate first electric energy charged in the storage battery;

a second calculating unit configured to calculate second electric energy of the storage battery dischargeable from the storage battery to a load, based on the first electric energy and the charge/discharge efficiencies;

a third calculating unit configured to calculate a unit charging price per unit electric energy required to charge the second electric energy based on the second electric energy, the electricity price in the time slot during which the storage battery is charged, the first electric energy, and the charge/discharge efficiencies; and

a control unit configured to compare the electricity price with the unit charging price in each of the time slots, cause an electric power system to charge the storage battery when the electricity price is lower than the unit charging price, and cause the storage battery to perform a discharge to the load when the electricity price is equal to or higher than the unit charging price.

FIG. 1

FIG. 2

SUPPLY OF 1.25 kWh
FROM ELECTRIC
POWER SYSTEM

SUPPLY OF
1.00 kWh TO LOAD

CHARGE
EFFICIENCY
p = 0.90

DISCHARGE
EFFICIENCY
q = 0.89

2

2

CHARGE 1.123 kWh
TO STORAGE BATTERY

DISCHARGE 1.123 kWh
FROM STORAGE BATTERY

FIG. 3

START

DETERMINE
BASIC SCHEDULE — S1

PERFORM
CORRECTION — S2

END

FIG. 4

START

RETRIEVE ELECTRICITY PRICE INFORMATION — S11

REARRANGE ELECTRICITY PRICES IN ASCENDING ORDER
ELECTRICITY PRICE $C_1$, TIME SLOT $B_1$
ELECTRICITY PRICE $C_2$, TIME SLOT $B_2$
...
ELECTRICITY PRICE $C_{23}$, TIME SLOT $B_{23}$
ELECTRICITY PRICE $C_{24}$, TIME SLOT $B_{24}$ — S12

$k=1$

S13

ELECTRICITY PRICE RATIO
$C_k / C_{24-(k-1)}$
$<$
CHARGE/DISCHARGE EFFICIENCIES
$p \times q$

NO

YES

S14

TIME SLOT $B_k$: CHARGE
TIME SLOT $B_{24-(k-1)}$: DISCHARGE

S15

TIME SLOT $B_k$ AND
TIME SLOT $B_{24-(k-1)}$:
DO NOT CHARGE

$k=k+1$

$k=12$ ? — NO

YES

END

FIG. 5

START

READ UNIT CHARGING PRICE X AND DISCHARGEABLE ELECTRIC ENERGY S IN LAST TIME SLOT OF PREVIOUS DAY — S21

T=1

S22

IS TIME SLOT t DISCHARGE, CHARGE, OR NONE OF BOTH?

CHARGE      DISCHARGE

NONE OF BOTH

S25

ELECTRICITY PRICE At $<$ UNIT CHARGING PRICE X

YES      NO

S26      S27

IS CHARGE ECONOMICAL? $At/(p \times q)+\beta < X$

YES    NO

IS DISCHARGE ECONOMICAL? $At > X+\alpha$

NO    YES

t=t+1

PERFORM CHARGE WITHIN RANGE OF CONTRACTED ELECTRIC ENERGY

PERFORM DISCHARGE WITHIN RANGE OF NOT CAUSING ADVERSE CURRENT

STOP ELECTRICITY STORAGE SYSTEM

S28

ESTIMATE CHARGING ELECTRIC ENERGY Wt — S231

ESTIMATE CHARGING ELECTRIC ENERGY Pt

S232

CALCULATE DISCHARGEABLE ELECTRIC ENERGY S
S'=S
$S = S' + Wt \times q \times p$ — S233   } S23

S241
S24 { S242
S243

CALCULATE DISCHARGEABLE ELECTRIC ENERGY S
S' = S
$S = S' - Pt$

S234

CALCULATE UNIT CHARGING PRICE X
X' = X

$$X = \frac{X' \times S' + At \times Wt \times p \times q}{S}$$

NO   t=24 ?

YES

END

FIG. 6

## INTERNATIONAL SEARCH REPORT

| International application No. |
|---|
| PCT/JP2013/081140 |

| A. CLASSIFICATION OF SUBJECT MATTER |
|---|
| *H02J3/32(2006.01)i, H01M10/44(2006.01)i, H02J7/00(2006.01)i* |

According to International Patent Classification (IPC) or to both national classification and IPC

| B. FIELDS SEARCHED |
|---|
| Minimum documentation searched (classification system followed by classification symbols) |
| H02J3/32, H02J3/38, H02J3/46, H02J7/00, H02J15/00, H01M10/44, G06Q50/06 |

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | WO 2012/046832 A1 (Sanyo Electric Co., Ltd.),<br>12 April 2012 (12.04.2012),<br>entire text; fig. 1 to 4<br>(Family: none) | 1-3,5,8-10<br>4,6,7 |
| A | JP 2013-207932 A (Kyocera Corp.),<br>07 October 2013 (07.10.2013),<br>entire text; fig. 1 to 8<br>(Family: none) | 1-10 |
| A | JP 2013-132174 A (Sanyo Electric Co., Ltd.),<br>04 July 2013 (04.07.2013),<br>paragraphs [0010] to [0046]; fig. 1 to 8<br>(Family: none) | 1-10 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 February, 2014 (13.02.14) | 25 February, 2014 (25.02.14) |

| Name and mailing address of the ISA/<br>Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012151948 A
- JP 2011244682 A
- JP 2012016271 A
- JP 2013078193 A
- JP 2013099140 A